# EUROPÄISCHE PATENTANMELDUNG

(11) **EP 4 212 975 A1**
(43) Veröffentlichungstag der Anmeldung: **19.07.2023**
(21) Anmeldenummer: 22151388.0
(22) Anmeldetag: 13.01.2022
(51) Int. Cl.: G05B 19/418

(54) **VERFAHREN ZUR KONFIGURATION EINES STEUERUNGSNETZWERKES, SOWIE STEUERUNGSNETZWERK, COMPUTERPROGRAMM UND COMPUTER-LESBARES MEDIUM**

(71) Anmelder: Siemens Energy Global GmbH & Co. KG, 81739 München (DE)
(72) Erfinder: Drebinger, Andreas, 91074 Herzogenaurach (DE)

(57) **Zusammenfassung**

Die Erfindung betrifft ein Verfahren zur Konfiguration eines Steuerungsnetzwerkes, wobei das Steuerungsnetzwerk eine übergeordnete Zentraleinheit (1) zum Steuern und Überwachen einer Anlagenanordnung mit mehreren dezentralen Anlagen und mindestens eine untergeordnete Remote-Einheit (2) zum unmittelbaren Steuern einer dezentralen Anlage umfasst, wobei zum Steuern der dezentralen Anlage Projektierungsdaten, welche anlagenbezogene Objekte und/oder Bausteine umfassen, in der Remote-Einheit (2) hinterlegt sind. Ferner betrifft die Erfindung ein Steuerungsnetzwerk, sowie ein Computerprogramm und ein Computerlesbares Medium.

## Beschreibung

Die vorliegende Erfindung betrifft ein Verfahren zur Konfiguration eines Steuerungsnetzwerkes. Ferner betrifft die vorliegende Erfindung ein Steuerungsnetzwerk, sowie ein Computerprogramm und ein computerlesbares Medium.

In vielen industriellen Bereichen werden zunehmend Anlagenanordnungen verwendet, die sich durch eine Vielzahl von miteinander gekoppelten dezentralen Anlagen auszeichnen. Gerade im Zusammenhang mit der Umstellung auf Stromerzeugung mittels erneuerbarer und regenerativer Energien entstehen große Windparks, die eine Vielzahl von Windkraftanlagen umfassen.

Vor diesem Hintergrund besteht häufig die Notwendigkeit, die dezentralen Anlagen nicht nur vor Ort unmittelbar steuern zu können, sondern auch einen entsprechenden Zugriff von einer Zentraleinheit oder Zentralwarte zu erlangen. Mit anderen Worten existiert in solchen Fällen ein Steuerungsnetzwerk, welches eine übergeordnete Zentraleinheit zum Steuern und Überwachen einer Vielzahl von dezentralen Anlagen und untergeordnete Remote-Einheiten zum unmittelbaren Steuern jeweils einer dezentralen Anlage umfasst. Bei einem solchen Steuerungsnetzwerk kann es sich auch um einen SCADA (Supervisory Control and Data Acquisition)-System handeln. Darunter versteht man ein Computer-System bzw. die Software zur Überwachung und Steuerung technischer Prozesse. Solche Steuerungsnetzwerke haben sich grundsätzlich bewährt. Allerdings wird es zu Teilen als nachteilig angesehen, dass die Konfiguration eines solchen Steuerungsnetzwerks sehr aufwendig ist, da alle Objekte, Bausteine und/oder Signale separat in der Zentraleinheit und in der Remote-Einheit konfiguriert bzw. projektiert werden müssen. Eine solche manuelle Projektierung ist zudem sehr fehleranfällig, was zu nicht konsistenten Projektierungsdaten in der Zentraleinheit und in der Remote-Einheit führen kann. Auch müssen Anlagenbilder oder andere Komponenten, die auf Signale der Remote-Einheit verweisen, angepasst werden, damit diese nicht mehr den Originalbaustein in der Remote-Einheit, sondern die über das Kommunikationsprotokoll zur Verfügung gestellten Signale referenzieren. Dies hat zur Folge, dass Änderungen in der Remote-Einheit auch sowohl eine Anpassung in der Remote-Einheit, als auch in der Zentraleinheit erfordern.

Aufgabe der vorliegenden Erfindung ist es daher, ein Verfahren zur Konfiguration eines Steuerungsnetzwerkes zur Verfügung zu stellen, welches die zuvor genannten Nachteile vermeidet und insbesondere ein einfaches und fehlerarmes Konfigurieren eines Steuerungsnetzwerkes ermöglicht.

Diese Aufgabe ist bei einem Verfahren zur Konfiguration eines Steuerungsnetzwerkes, wobei das Steuerungsnetzwerk eine übergeordnete Zentraleinheit zum Steuern und Überwachen einer Anlagenanordnung mit mehreren dezentralen Anlagen und mindestens eine untergeordnete Remote-Einheit zum unmittelbaren Steuern einer dezentralen Anlage umfasst, wobei zum Steuern der dezentralen Anlage Projektierungsdaten, welche anlagenbezogene Objekte und/oder Bausteine umfassen, in der Remoteeinheit hinterlegt sind, dadurch gelöst, dass das Verfahren die folgenden Schritte umfasst:
- Konfigurieren mindestens einer Remote-Einheit an der Zentraleinheit durch Angabe von Informationen betreffend die jeweilige Remote-Einheit;
- Exportieren der Projektierungsdaten der Remote-Einheit (en) und Importieren der Projektierungsdaten in die Zentraleinheit, wobei durch die Angabe der Informationen betreffend die jeweilige Remote-Einheit sämtlichen Objekten und Bausteinen der Remote-Einheit (en) eine eindeutige Identifikationskennung in der Zentraleinheit zugeordnet wird.

Der Erfindung liegt damit die grundsätzliche Überlegung zugrunde, in einem ersten Schritt an der Zentraleinheit Informationen betreffend die jeweilige Remote-Einheit anzugeben und auf diese Weise die Remote-Einheit der Zentraleinheit bekannt zu machen. Mit anderen Worten erfährt die Zentraleinheit durch Angabe entsprechender Informationen von der Existenz der jeweiligen Remote-Einheit.

In einem zweiten Schritt werden dann die in der Remote-Einheit vorliegenden Projektierungsdaten exportiert und in die Zentraleinheit importiert. Das bedeutet, dass auf einfache Weise sämtliche Projektierungsdaten der Remote-Einheit in einem Schritt in die Zentraleinheit importiert werden. Auf diese Weise ist es nicht mehr erforderlich, manuell die Projektierungsdaten sowohl in der Remote-Einheit, als auch in der Zentraleinheit einzugeben. Vielmehr reicht es aus, die Projektierungsdaten zur Steuerung der dezentralen Anlage einmal in der Remote-Einheit zu erzeugen und anschließend in die Zentraleinheit zu übertragen. Durch die Angabe von Informationen betreffend die Remote-Einheit in der Zentraleinheit kann jedem Objekt und/oder Baustein betreffend der jeweiligen Remote-einheit eine eindeutige globale Identifikationskennung in der Zentraleinheit zugeordnet werden. Das bedeutet, dass selbst bei einer Vielzahl von dezentralen Anlagen, die mit der Zentraleinheit überwacht bzw. gesteuert werden sollen, jedem Objekt und jedem Baustein jeder Remote-Einheit eine eindeutige globale Identifikationskennung zugeordnet wird, so dass Fehler der Zuordnung sicher vermieden werden können. Bei einem Objekt kann es sich beispielsweise um ein Signal handeln. Ein solches Signal kann beispielsweise als Analog- und/oder Digital-Signal vorliegen. Ferner kann es sich bei Objekten auch um Ports handeln. Diese können einen Teil einer Netzwerkadresse bilden.

In weiterer Ausgestaltung des erfindungsgemäßen Verfahrens kann das Konfigurieren der Remote-Einheit an der Zentraleinheit die Angabe einer eindeutigen Kennung der Remote-Einheit und/oder die Angabe einer eindeutigen Netzwerkadresse der Remote-Einheit umfassen. Die Kennung der Remote-Einheit stellt aber eine eindeutige Identifizierung für die entsprechende Remote-Einheit in der Zentraleinheit dar, somit eine Identifikation für eine spezifische dezentrale Anlage. Netzwerkadressen, beispielsweise IP-Adressen, legen fest, über welchen Zugangspunkt die Remote-Einheit kontaktiert werden kann. Denkbar ist auch, dass weitere Adressen von der betreffenden Remote-Einheit angefordert werden können, beispielweise konkrete Adressen von einzelnen Automatisierungsgeräten. Sind in der Remote-Einheit mehrere redundante Einrichtungen, beispielsweise Server, vorgesehen, können auch mehrere Netzwerkadressen angegeben werden. Denkbar ist auch, dass die Informationen betreffend die jeweilige Remote-Einheit weitere Angaben umfassen, wie beispielsweise Namen, Beschreibungen oder Zugriffsbeschränkungen.

Die Identifikationskennung der Objekte oder Bausteine in der Zentraleinheit beinhaltet bevorzugt eine Kennung der jeweiligen Remote-Einheit. Denkbar ist auch, dass zwischen der Remote-Einheit und der Zentraleinheit ein Remote-Einheit-Controller zwischengeschaltet ist, sodass die Identifikationskennung der Objekte oder Bausteine in der Zentraleinheit indirekt über den Remote-Einheit-Controller referenziert wird. Mit anderen Worten fungiert ein solcher Remote-Einheit-Controller als Gateway zwischen der Zentraleinheit und der jeweiligen Remote-Einheit. Dementsprechend beinhaltet in diesem Fall die Identifikationskennung der Objekte oder Bausteine in der Zentraleinheit eine Kennung des Remote-Einheit-Controllers, der dann wiederum eine Verbindung zur jeweiligen Remote-Einheit herstellt.

In weiterer Ausgestaltung kann die dezentrale Anlage eine oder mehrere Automatisierungskomponente(n) umfassen, wobei die anlagenbezogenen Objekte und/oder Bausteine jeweils einer Automatisierungskomponente zugeordnet sind und die Identifikationskennung der Objekte und Bausteine in der Zentraleinheit eine Kennung der jeweiligen Automatisierungskomponente der dezentralen Anlage beinhaltet. Mit anderen Worten kann eine weitere Hierarchieebene vorgesehen sein, wenn die zu überwachende bzw. zu steuernde dezentrale Anlage mehrere Komponenten umfasst. Bei solchen Automatisierungskomponenten kann es sich beispielsweise um Ventile, Motoren, Sensoren oder dergleichen handeln. Liegen mehrere solcher Automatisierungskomponenten in einer dezentralen Anlage vor, so können die Objekte bzw. Bausteine diesen Komponenten zugeordnet sein. In diesem Fall macht es Sinn, dass die Identifikationskennung der Objekte und Bausteine in der Zentraleinheit eine Kennung der jeweiligen Automatisierungskomponente beinhaltet. Hierdurch wird eine einfache und übersichtliche Struktur des Steuerungsnetzwerkes ermöglicht.

In konkreter Ausgestaltung kann die Identifikationskennung mehrere alphanumerische, insbesondere numerische Zeichenfolgen umfassen.

In weiterer Ausgestaltung kann eine erste Zeichenfolge die Kennung der jeweiligen Remote-Einheit bzw. eines Remote-Einheit-Controller, eine zweite Zeichenfolge die Kennung der jeweiligen Automatisierungskomponente und eine dritte Zeichenfolge die Kennung des jeweiligen Objekts oder Bausteins sein. In diesem Fall umfasst die Identifikation drei Zeichenfolgen, welche die Hierarchie des Steuerungsnetzwerkes abbilden.

Beim Importieren der Projektierungsdaten in die Zentraleinheit kann die Kennung der jeweiligen Automatisierungskomponente und/oder die Kennung des jeweiligen Objekts oder Bausteins direkt aus den zu importierenden Daten ermittelt werden, weil diese bevorzugt identisch ist mit der jeweiligen Kennung innerhalb der jeweiligen Remote-Einheit. Zusätzliche Eingriffe des Anwenders sind in diesem Fall nicht erforderlich.

Die Projektierungsdaten können Funktionspläne und/oder Kontaktpläne und/oder Signalpläne und/oder Anlagenbilder umfassen. Funktionspläne geben dabei an, welche Objekte einer Automatisierungskomponente zugeordnet sind und in welcher Verbindung diese stehen.

Beim Importieren der Projektierungsdaten können automatisch alle Signalreferenzen auch in Anlagenbildern von den ursprünglich in der Remote-Einheit vergebenen Kennungen auf die neu in der Zentraleinheit zugewiesenen Kennungen umgesetzt werden. Das bedeutet, dass die Identifikation sämtlicher Objekte beim Import in die Zentraleinheit automatisch umgesetzt wird.

Das erfindungsgemäße Verfahren kann ferner dadurch gekennzeichnet sein, dass beim Importieren der Projektierungsdaten in die Zentraleinheit diese gefiltert werden und/oder manuell ausgewählt werden, so dass nur auf bestimmte Objekte und/oder Bausteine der Remote-Einheit in der Zentraleinheit zugegriffen werden kann. Mit anderen Worten wird der Zugriff der Zentral-Einheit auf Objekte bzw. Bausteine der Remote-Einheit in diesem Fall eingeschränkt, was bei bestimmten Anlagenkonfigurationen erforderlich sein kann. Eine solche Situation ist beispielsweise dann gegeben, wenn aus Sicherheitsgründen bestimmte Eingriffe nur in der unmittelbaren Umgebung der dezentralen Anlage stattfinden sollen.

Gemäß einer Weiterbildung des erfindungsgemäßen Verfahrens kann vorgesehen sein, dass das Exportieren der Projektierungsdaten der Remote-Einheit und das anschließende Importieren in die Zentraleinheit automatisiert, insbesondere änderungsgesteuert durchgeführt wird. Das bedeutet, dass bei Änderungen in der Remote-Einheit diese Änderungen automatisch an die Zentraleinheit übertragen werden, somit die Zentraleinheit automatisch stets auf dem aktuellen Stand gehalten wird.

Das Steuerungsnetzwerk kann ferner mindestens einen Remote-Einheit-Controller aufweisen, welcher einer oder mehreren Remote-Einheiten zugeordnet ist. Mit anderen Worten handelt es sich um eine zwischen der Zentraleinheit und der remote-Einheit zwischengeschaltete Komponente, die exakt dieselben Schnittstellen zur Verfügung stellt, wie eine entsprechende Automatisierungskomponente. Mit anderen Worten fungiert der Remote-Einheit-Controller als eine Art Gateway zur ursprünglichen Remote-Einheit.

Der Remote-Einheit-Controller kann dabei bevorzugt zwischen einem Baustein mit einer Automatisierungsfunktion und einem Objekt oder Baustein in der Remote-Einheit unterscheiden. Durch die Zwischenschaltung eines Remote-Einheit-Controllers zwischen der Zentraleinheit und der Remote-Einheit kann unnötige Kommunikation zwischen der Zentraleinheit und der Remote-Einheit vermieden werden. Die Zwischenschaltung des Remote-Einheit-Controllers erfordert auch keine Anpassung von anderen Komponenten, insbesondere keine softwaretechnischen Anpassungen, da die Funktionen in der Zentraleinheit in der gleichen Weise zur Verfügung stehen wie die Funktion innerhalb der Remote-Einheit.

Dabei können einem Remote-Einheit-Controller eine oder mehrere Remote-Einheiten zugewiesen werden. Durch einen solchen Remote-Einheit-Controller können auch mehrere Komponenten einer Zentraleinheit, bzw. mehrere Zentraleinheiten auf die jeweiligen Automatisierungskomponenten einer Remote-Einheit zugreifen. Dadurch wird ein für alle Komponenten des Steuerungsnetzwerks transparenter Zugriff auf die Remote-Einheit und die dazugehörigen Automatisierungskomponenten realisiert.

Konkret kann der Remote-Einheit-Controller an der Zentraleinheit oder an der Remote-Einheit oder zwischen der Remote-Einheit und der Zentraleinheit angeordnet sein.

In weiterer Ausgestaltung können jeder Remote-Einheit zwei Remote-Einheit-Controller zugeordnet sein, wobei bevorzugt ein Remote-Einheit-Controller an der Zentraleinheit und der andere Remote-Einheit-Controller an der Remote-Einheit angeordnet ist.

Ferner kann vorgesehen sein, dass der Remote-Einheit-Controller die Datenübertragung zwischen der Remote-Einheit und der Zentraleinheit puffert, wenn die Verbindung zwischen der Remote-Einheit und der Zentraleinheit temporär unterbrochen ist. Bevorzugt ist ein solcher Remote-Einheit-Controller, welcher die Datenübertragung zwischen der Remote-Einheit und der Zentraleinheit puffert, an der Remote-Einheit angeordnet. Auf diese Weise können kontinuierlich Daten aufgezeichnet bzw. weitergegeben werden, auch wenn eine physikalische Verbindung zu der Zentraleinheit hin unterbrochen ist.

Die Zentraleinheit und die Remote-Einheiten können mit einer Netzwerkverbindung insbesondere in Form eines Virtual Private Networks (VPN) verbunden sein.

Die der Erfindung zugrunde liegende Aufgabe wird ferner gelöst durch ein Steuerungsnetzwerk, welches zur Durchführung des zuvor beschriebenen erfindungsgemäßen Verfahrens ausgebildet und eingerichtet ist. Ferner wird die der Erfindung zugrunde liegende Aufgabe durch ein Computerprogramm umfassend Programmcode-Mittel zur Durchführung des zuvor beschriebenen erfindungsgemäßen Verfahrens sowie durch ein computerlesbares Medium, welches Instruktionen umfasst, die, wenn sie auf wenigstens einem Computer ausgeführt werden, den wenigstens einen Computer veranlassen, die Schritte des zuvor beschriebenen Verfahrens durchzuführen, gelöst.

Für die weitere Ausgestaltung des erfindungsgemäßen Verfahrens wird auf die Unteransprüche und die nachstehende Beschreibung eines Ausführungsbeispiels unter Bezugnahme auf die Zeichnung verwiesen. In der Zeichnung zeigt:

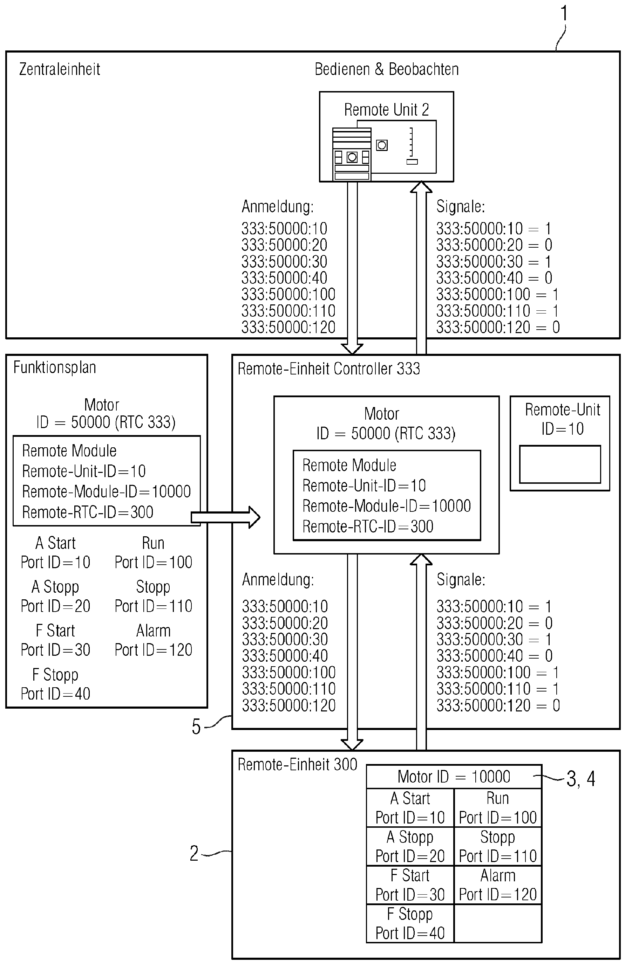

Figur 1 ein Steuerungsnetzwerk in schematischer Darstellung.

Die Figur 1 zeigt den Aufbau eines Steuerungsnetzwerks. Dieses besitzt eine übergeordnete Zentraleinheit 1 zum Steuern und Überwachen einer Anlagenanordnung mit mehreren dezentralen Anlagen. Ferner umfasst das Steuerungsnetzwerk eine untergeordnete Remote-Einheit 2 zum unmittelbaren Steuern einer dezentralen Anlage.

Die Remote-Einheit 2 umfasst vorliegend eine Automatisierungskomponente 3, konkret einen Motor 4. Der Motor 4 besitzt in der Remote-Einheit 2 eine Kennung als Automatisierungskomponente in Form der numerischen Zeichenfolge 10000. Ferner umfassen die den Motor betreffenden Projektierungsdaten einen Funktionsplan mit mehreren Objekten in Form von Signalen/Ports, welche beispielsweise die Signal-/Port- Kennungen (Port ID) 100 für den Start des Motors, 110 für das Anhalten des Motors und 120 für einen Alarm beinhalten. Die Remote-Einheit hat wiederum die Kennung 300.

Zwischen der Zentraleinheit 1 und der Remote-Einheit 2 ist ein Remote-Einheit-Controller 5 angeordnet. Dieser ist vorliegend der Remote-Einheit 300 zugeordnet und fungiert als Gateway zwischen der Zentraleinheit 1 und der Remote-Einheit 2. Der Remote-Einheit-Controller besitzt vorliegend die Kennung 333. In dem Remote-Einheit-Controller 5 sind die Projektierungsdaten des Motors, welcher durch die Remote-Einheit 300 unmittelbar gesteuert wird, hinterlegt. Die einzelnen Signale bzw. Bausteine besitzen dabei eine eindeutige Identifikationskennung, welche drei numerische Zeichenfolgen umfasst. Beispielsweise umfasst die Identifikationskennung für den Baustein "Start des Motors" zunächst die Zahlenfolge 300 für die entsprechende Remote-Einheit 2. Durch einen Doppelpunkt getrennt folgt dann die Kennung für die Automatisierungskomponente 3, vorliegend den Motor 4, welche hier aus der Zahlenfolge (ID) 10000 besteht. Die dritte Kennung (100) betrifft das direkte Signal bzw. den direkten Port für den Start des Motors. Auf diese Weise ist eine eindeutige Identifikationskennung im Remote-Einheit-Controller hinterlegt.

In der Zentraleinheit ist ebenfalls eine eindeutige Identifikationskennung für die verschiedenen Bausteine zugeordnet. Da der Remote-Einheit-Controller 5 mit der Kennung 333 zwischen der Remote-Einheit 2 mit Kennung 300 und der Zentraleinheit 1 angeordnet ist, besitzt das entsprechende Signal für den Start des Motors als erste Zahlenfolge die Nummer 333, gefolgt von der Kennung des Motors (50000) und von der konkreten Signal-/ Port-Kennung (100). Auf diese Weise ist der Baustein der Remote-Einheit 2 eindeutig in der Zentraleinheit 1 identifiziert.

Das Konfigurieren eines solchen Steuerungsnetzwerks läuft so ab, dass in einem ersten Schritt die Remote-Einheit 2 an der Zentraleinheit 1 bekannt gemacht wird. Dazu werden Informationen betreffend die Remote-Einheit 2 angegeben. Konkret kann es sich hierbei um die Kennung 300 handeln bzw. die Kennung des Remote-Einheit-Controllers 333. Die Informationen können auch ferner Netzwerkadressen umfassen.

In einem nächsten Schritt werden die Projektierungsdaten, vorliegend u.a. der Funktionsplan betreffend den Motor 4 und die Objekte/Bausteine betreffend den Motor 4 aus der Remote-Einheit exportiert und in die Zentraleinheit 1 importiert. Dabei wird sämtlichen Objekten der Remote-Einheit 2, vorliegend konkret der Automatisierungskomponente 3, eine eindeutige Identifikationskennung in der Zentraleinheit 1 zugeordnet (z.B. 333:50000:100).

Der Remote-Einheit-Controller 5 ist ferner ausgebildet, bei Änderungen in den Funktionsplänen der Remote-Einheit 2 diese Änderungen in den Projektierungsdaten automatisch an die Zentraleinheit 1 zu übermitteln. Dadurch wird erreicht, dass die Zentraleinheit 1 stets auf dem aktuellen Stand ist.

Der Remote-Einheit-Controller 5 ist grundsätzlich in der Lage, zwischen einem Baustein, dessen Automatisierungsfunktion lokal in der Remote-Einheit 2 ausgeführt wird und einem Baustein, der Zugang von anderen Komponenten, beispielsweise der Zentraleinheit erhalten muss, zu unterscheiden. Damit kann durch die Zwischenschaltung des Remote-Einheit-Controllers 5 unnötige Kommunikation zwischen der Zentraleinheit 1 und der Remote-Einheit 2 vermieden werden. Die Zwischenschaltung des Remote-Einheit-Controllers 5 erfordert auch keine Anpassung von anderen Komponenten, insbesondere keine softwaretechnische Anpassung, da die Funktionen in der Zentraleinheit 1 in der Gleichen Weise zur Verfügung stehen wie die Funktionen innerhalb der Remote-Einheit 2.

Durch das erfindungsgemäße Verfahren ist keine zusätzliche Projektierung von Signalen, Objekten, Baustein oder Kommunikationsprotokollen für die Ankopplung von Remote-Einheiten in der Zentraleinheit erforderlich, da sämtliche Objekte mit einer eindeutigen Identifikationskennung versehen werden. damit sind die verwendeten Signale stets konsistent. Auch weitere Mechanismen wie die Quittierung von Alarmen muss nicht über eine zusätzliche Projektierung nachträglich integriert werden. Solche Mechanismen sind sowohl in der Remote-Einheit als auch in der Zentral-Einheit sichtbar, unabhängig davon, ob diese dezentral oder zentral vorgenommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Konfiguration eines Steuerungsnetzwerkes, wobei das Steuerungsnetzwerk mindestens eine, insbesondere genau eine übergeordnete Zentraleinheit (1) zum Steuern und Überwachen einer Anlagenanordnung mit mehreren dezentralen Anlagen und mindestens eine untergeordnete Remote-Einheit (2) zum unmittelbaren Steuern einer dezentralen Anlage umfasst, wobei zum Steuern der dezentralen Anlage Projektierungsdaten, welche anlagenbezogene Objekte und/oder Bausteine umfassen, in der Remote-Einheit (2) hinterlegt sind,
wobei das Verfahren die folgenden Schritte umfasst:
- Konfigurieren mindestens einer Remote-Einheit (2) an der Zentraleinheit durch Angabe von Informationen betreffend die jeweilige Remote-Einheit (2);
- Exportieren der Projektierungsdaten der Remote-Einheit(en) (2) und Importieren der Projektierungsdaten in die Zentraleinheit(en) (1), wobei durch die Angabe der Informationen betreffend die jeweilige Remote-Einheit (2) sämtlichen Objekten und Bausteinen der Remote-Einheit(en) (2) eine eindeutige Identifikationskennung in der/den Zentraleinheit(en) (1) zugeordnet wird.

2. Verfahren nach Anspruch 1, **dadurch gekennzeichnet, dass** das Konfigurieren der Remote-Einheit (2) an der Zentraleinheit (1) die Angabe einer eindeutigen Kennung der Remote-Einheit (2) und/oder die Angabe einer eindeutigen Netzwerkadresse der Remote-Einheit (2) umfasst.

3. Verfahren nach Anspruch 1 oder Anspruch 2, **dadurch gekennzeichnet, dass** die Identifikationskennung der Objekte oder Bausteine eine Kennung der jeweiligen Remote-Einheit (2) beinhaltet.

4. Verfahren nach Anspruch 3, **dadurch gekennzeichnet, dass** die dezentrale Anlage eine oder mehrere Automatisierungskomponenten(n) (3) umfasst, wobei die anlagenbezogenen Objekte und/oder Bausteine jeweils einer Automatisierungskomponente (3) zugeordnet sind und die Identifikationskennung der Objekte und Bausteine in der Zentraleinheit (1) eine Kennung der jeweiligen Automatisierungskomponente (3) der Anlage beinhaltet.

5. Verfahren nach Anspruch 4, **dadurch gekennzeichnet, dass** die Identifikationskennung mehrere alphanumerische, insbesondere numerische Zeichenfolgen umfasst.

6. Verfahren nach Anspruch 5, **dadurch gekennzeichnet, dass** eine erste Zeichenfolge die Kennung der jeweiligen Remote-Einheit (2), eine zweite Zeichenfolge die Kennung der jeweiligen Automatisierungskomponente (3) und eine dritte Zeichenfolge die Kennung des jeweiligen Objekts oder Bausteins ist.

7. Verfahren nach einem der vorherigen Ansprüche, **dadurch gekennzeichnet, dass** die Projektierungsdaten Funktionspläne und/oder Kontaktpläne und/oder Signalpläne und/oder Anlagenbilder umfassen, und/oder dass beim Importieren der Projektierungsdaten in die Zentraleinheit (1) diese gefiltert werden und/oder manuell ausgewählt werden, so dass nur auf bestimmte Objekte und/oder Bausteine der Remote-Einheit (2) in der Zentraleinheit (1) zugegriffen werden kann, und/oder dass das Exportieren der Projektierungsdaten der Remote-Einheit (2) und das anschließende Importieren in die Zentraleinheit (1) automatisiert, insbesondere änderungsgesteuert durchgeführt wird.

8. Verfahren nach einem der vorherigen Ansprüche, **dadurch gekennzeichnet, dass** das Steuerungsnetzwerk ferner mindestens einen Remote-Einheit-Controller (5) aufweist, welcher einem oder mehreren Objekten oder Bausteinen mit zugehörigen Funktionsplänen zugeordnet ist.

9. Verfahren nach Anspruch 8, **dadurch gekennzeichnet, dass** der Remote-Einheit-Controller (5) an einer Zentraleinheit (1) oder an der Remote-Einheit (2) oder zwischen der Remote-Einheit (2) und der Zentraleinheit (1) angeordnet ist.

10. Verfahren nach Anspruch 8 oder Anspruch 9, **dadurch gekennzeichnet, dass** jeder Remote-Einheit (2) zwei Remote-Einheit-Controller (5) zugeordnet sind, wobei bevorzugt ein Remote-Einheit-Controller (5) an der Zentraleinheit (1) und ein Remote-Einheit-Controller (5) an der Remote- Einheit (2) angeordnet ist.

11. Verfahren nach einen der Ansprüche 8 bis 10, **dadurch gekennzeichnet, dass** ein Remote-Einheit-Controller (5) die Datenübertragung zwischen der Remote-Einheit (2) und der Zentraleinheit (1) puffert, wenn die Verbindung zwischen der Remote-Einheit (2) und der Zentraleinheit (1) temporär unterbrochen ist.

12. Verfahren nach einem der vorherigen Ansprüche, **dadurch gekennzeichnet, dass** die Zentraleinheit (1) und die Remote-Einheiten (2) mit einer Netzwerkverbindung insbesondere in Form eines Virtual Private Networks (VPN) verbunden sind.

13. Steuerungsnetzwerk, welches zur Durchführung des Verfahrens nach einem der Ansprüche 1 bis 12 ausgebildet und eingerichtet ist.

14. Computerprogramm umfassend Programmcode-Mittel zur Durchführung des Verfahrens nach einem der Ansprüche 1 bis 12.

15. Computerlesbares Medium, welches Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.
